## Europäisches Patentamt

## European Patent Office

## Office européen des brevets

(19)

(11) Numéro de publication: **0 136 757 B1**

(12) **FASCICULE DE BREVET EUROPEEN**

(45) Date de publication du fascicule du brevet:
**27.01.88**

(21) Numéro de dépôt: **84201334.4**

(22) Date de dépôt: **14.09.84**

(51) Int. Cl.⁴: **H 04 K 3/00,** H 04 B 1/66,
H 04 B 7/26

(54) Poste émetteur-récepteur pour un système de transmission d'informations par évasion de fréquences.

(30) Priorité: **30.09.83 FR 8315611**

(43) Date de publication de la demande:
**10.04.85 Bulletin 85/15**

(45) Mention de la délivrance du brevet:
**27.01.88 Bulletin 88/4**

(84) Etats contractants désignés:
**DE FR GB IT NL SE**

(56) Documents cités:
**EP - A - 0 082 054
DE - A - 3 129 911**

**IEE PROCEEDINGS SECTION A-K, vol. 129, partie F, no. 3, juin 1982, pages 213-222, Old Woking, GB; P.J. MUNDAY et al.: "Jaguar-V frequency-hopping radio system"**

(73) Titulaire: **TELECOMMUNICATIONS RADIOELECTRIQUES ET TELEPHONIQUES T.R.T., 88, rue Brillat Savarin, F-75013 Paris (FR)**

(84) Etats contractants désignés: **FR**

(73) Titulaire: **N.V. Philips' Gloeilampenfabrieken, Groenewoudseweg 1, NL-5621 BA Eindhoven (NL)**

(84) Etats contractants désignés: **DE GB IT NL SE**

(72) Inventeur: **David, Guy, Albert Jules, SOCIETE CIVILE S.P.I.D. 209 rue de l'Université, F-75007 Paris (FR)**
Inventeur: **Van Uffelen, Jean-Pierre Henri, SOCIETE CIVILE S.P.I.D. 209 rue de l'Université, F-75007 Paris (FR)**
Inventeur: **Defeuilley, Jean-Pierre Marcel, SOCIETE CIVILE S.P.I.D. 209 rue de l'Université, F-75007 Paris (FR)**

(74) Mandataire: **Chaffraix, Jean et al, Société Civile S.P.I.D. 209, rue de l'Université, F-75007 Paris (FR)**

ACTORUM AG

# Description

L'invention concerne un poste émetteur-récepteur pour un système de transmission d'informations par évasion de fréquences, comportant un générateur de codes pour définir l'exploitation d'une pluralité de canaux selon une loi dite loi de sauts rapides pour un poste émetteur-récepteur en position émission ou en position réception et selon une loi dite loi de sauts lents pour un poste émetteur-récepteur en position veille, la loi de sauts rapides consistant en l'exploitation de chacun des canaux pendant un temps Tp.

La transmission d'informations par évasion de fréquences (mieux connue sous le nom anglo-saxon de FREQUENCY HOPPING) est utilisée notamment lorsqu'on souhaite transmettre des informations secrètes d'une manière sûre en évitant le brouillage éventuel des tiers mal intentionnés. Ce souhait est d'autant mieux exaucé que ladite loi de sauts rapides est compliquée c'est-à-dire que la séquence des codes élaborés par le générateur de codes est longue et le nombre de canaux de fréquences, élevé. Ceci présente des difficultés puisque pour qu'une transmission puisse avoir lieu il faut qu'il y ait une correspondance entre le canal utilisé du côté émission et le canal d'écoute du côté réception. Une première mesure que l'on prend pour surmonter cette difficulté consiste à caler, une fois pour toutes, tous les générateurs de code; ces générateurs calés restent alors toujours en fonctionnement.

Lorsque ce code de synchronisation est reçu par un poste émetteur-récepteur en position veille, s'impose alors une première exigence: il faut que le passage de la loi de saut lent à la loi de saut rapide se fasse le plus rapidement possible afin de faciliter le trafic. Pour s'assurer que le code de synchronisation soit bien reçu par le poste émetteur-récepteur en position veille, on s'impose du côté émission une deuxième exigence à savoir que le premier canal de la loi de sauts rapides utilisé par un poste qui passe de la position veille à la position émission doit être celui qui serait utilisé par ce même poste mis en position émission depuis l'opération de calage dont il a été question ci-dessus.

Il est bien évident que ce calage initial n'est pas suffisant pour assurer cette correspondance, puisque d'une part une dérive inévitable des générateurs va survenir au cours du temps et que d'autre part les durées de propagation entre les différents postes émetteurs-récepteurs sont différentes; ainsi il peut même arriver qu'il n'y ait pas de recoupement entre les canaux du côté émission et du côté réception. Une deuxième mesure que l'on prend pour qu'un poste émetteur-récepteur puisse se synchroniser a été décrite dans la demande de brevet européen 0 082 054. Cette deuxième mesure consiste, pour un poste émetteur-récepteur cherchant à établir une communication, à émettre des mots de synchronisation dans chaque palier de la loi de sauts rapides tandis que les postes émetteurs-récepteurs en attente sont soumis à une loi de sauts lents dont l'évolution est fixée par une durée de silence, cette durée du silence étant la durée pendant laquelle lesdits postes n'ont pas communiqué.

Cette deuxième mesure décrite implique déjà un premier inconvénient dû à la nécessité de la séquence d'appel formée du mot de synchronisation se répétant sur différents paliers. En effet, il est alors impossible pour un poste émetteur-récepteur qui n'a pas capté cette séquence de participer à la communication du poste émetteur-récepteur ayant lancé cette séquence. Un deuxième inconvénient est dû au fait qu'il faut mesurer la durée de silence, ce qui implique qu'il faut prévoir des moyens pour la mesurer et, en plus, des moyens pour faire évoluer la loi de sauts lents au fur et à mesure que cette durée devient importante.

La présente invention propose un poste émetteur-récepteur du genre mentionné ci-dessus qui ne présente pas ces inconvénients.

Pour cela, un tel poste est remarquable en ce qu'il comporte un dispositif de mémoire auquel sont rattachés d'une part un circuit d'écriture pour y emmagasiner au fur et à mesure les codes provenant du générateur et d'autre part un circuit de lecture pour y prélever les codes en fonction des positions du poste émetteur-récepteur:
– en position émission et réception, pour établir la loi de sauts rapides,
– en position veille pour établir la loi de sauts lents consistant en un changement de canaux d'écoute exploités pendant N × Tp correspondant chacun à un canal médian d'une succession de N canaux de ladite loi de sauts rapides, et des moyens pour inclure un code de synchronisation dans chaque canal médian.

Une caractéristique de l'invention selon laquelle un poste émetteur-récepteur est remarquable en ce que le dispositif de mémoire est formé par une mémoire à accès direct ayant une capacité pour N codes tandis que le circuit d'écriture est un compteur modulo N s'incrémentant d'une unité à chaque code fourni par le générateur de code, en ce que le circuit de lecture prélève:
– en position émission un code dont l'adresse en mémoire est définie à partir de code du compteur modulo N par une certaine relation,
– en position veille un code à l'adresse du code définissant le canal médian,
– en position réception le code à l'adresse supérieure d'une unité à l'adresse du code médian, dès que le signal en sortie d'un circuit de reconnaissance de code de synchronisation apparaît et successivement les codes rangés à des adresses successives de la mémoire, permet de satisfaire ces deux exigences.

La description suivante faite en regard des dessins annexés, le tout donné à titre d'exemple non limitatif, fera bien comprendre comment l'invention peut être réalisée.

La figure 1 est un schéma qui illustre l'exploitation de canaux selon les lois dites: loi de sauts rapides et loi de sauts lents.

La figure 2 montre la présence d'un temps de garde $T_g$ entre chauqe changement de canal.

La figure 3 montre la répartition des informations transmises sur chaque canal.

La figure 4 montre un poste émetteur-récepteur conforme à l'invention.

La figure 5 est un diagramme-temps illustrant le fonctionnement d'un poste émetteur-récepteur conforme à l'invention passant de la position veille à la position émission.

La figure 6 est un diagramme-temps illustrant le fonctionnement d'un poste émetteur-récepteur conforme à l'invention passant de la position veille à la position réception.

La figure 7 montre l'allure de quelques signaux utilisés pour fixer les temps d'inscription et les temps de lecture de la mémoire faisant partie du poste émetteur-récepteur de la figure 4.

La figure 8 montre la constitution du circuit de régulation faisant partie, selon une variante de l'invention, du poste émetteur-récepteur de la figure 4.

Les figures 9 et 10 sont des diagrammes-temps pour expliquer le fonctionnement du circuit de régulation dans le cas où il faut fournir des signaux à cadence plus lente et plus rapide respectivement.

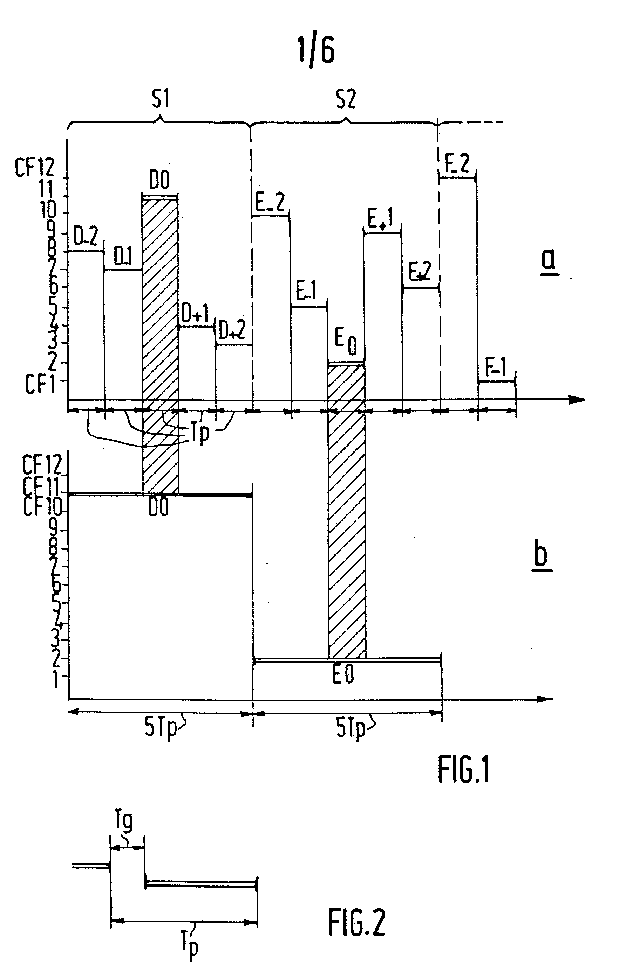

Les systèmes de transmission par évasion de fréquence utilisent une pluralité de canaux de fréquence; ces canaux portent les références CF1 à CF12 à la figure 1. Chacun de ces canaux est utilisé pendant un temps Tp selon une loi dite loi de sauts rapides; ainsi à la figure 1$\underline{a}$ on exploite successivement les canaux CF8, $\overline{C}$F7, CF11, CF4, CF3, CF10, CF5, CF2, CF9, CF6, CF12, CF2 ... A partir de cette loi de sauts rapides, on définit une loi de sauts lents. Pour cet exemple on prend des successions S1, S2;.. de cinq canaux. Dans chacune de ces successions on prend un canal médian: CF11 pour S1, CF2 pour S2 ... La loi de sauts lents consiste à prendre ces canaux médians pendant une durée 5Tp comme cela est représenté à la figure 1$\underline{b}$. Le canal médian de la loi de sauts rapides correspond au milieu du canal de la loi de sauts lents.

Il convient de noter que le changement de canal ne s'effectue pas d'une manière instantanée; on prévoit un temps de garde Tg avant que le canal ne soit réellement utilisé après un changement de canal (voir figure 2).

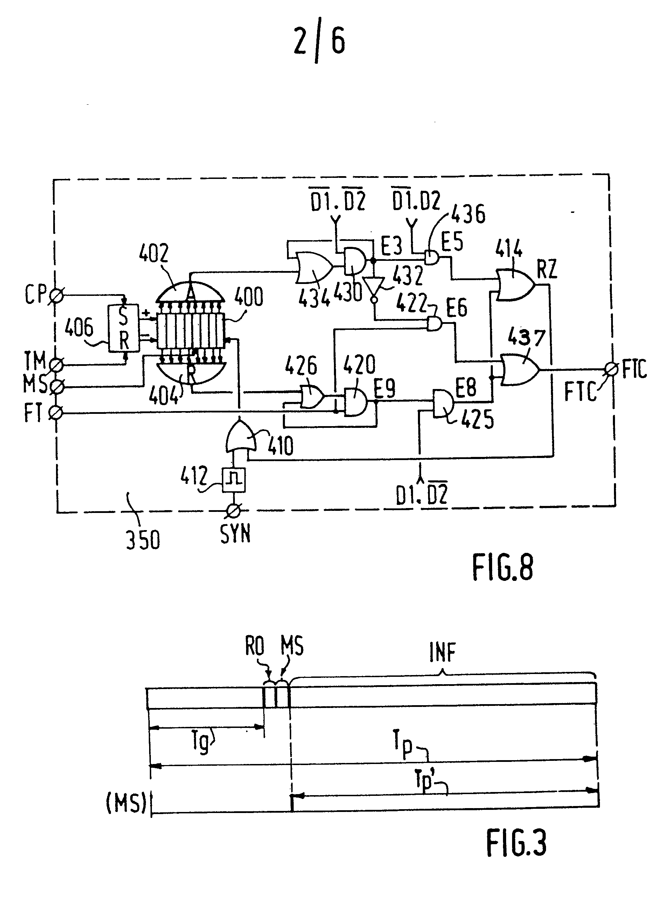

A la figure 3, on a représenté la répartition des éléments binaires transmis par un canal médian pendant la durée Tp. Après le temps de garde Tg, une suite de roulements RO, qui est une suite alternée de «1» et de «0» binaires, est transmise afin de faciliter la synchronisation de l'horloge, à la fréquence d'apparition des éléments binaires; après cette suite, on transmet le mot de code de synchronisation MS puis enfin le reste du temps les éléments binaires d'information utiles: INF.

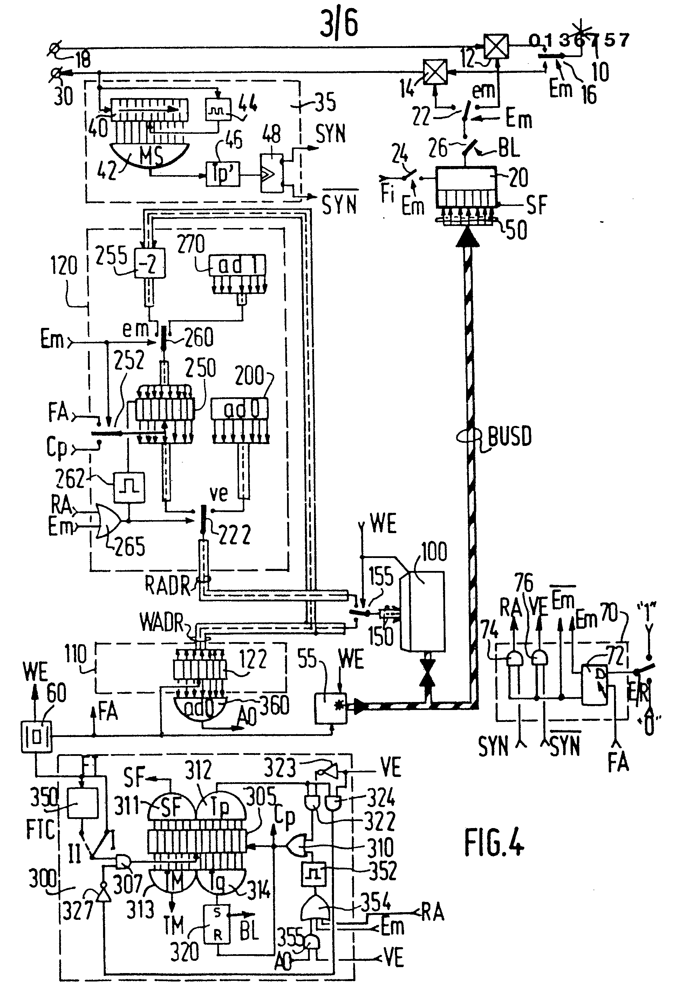

La figure 4 représente un poste émetteur-récepteur conforme à l'invention. Une antenne 10 sert tant à l'émission qu'à la réception. Cette antenne est connectée donc, soit à la sortie d'un modulateur d'émission 12 soit à l'entrée d'un récepteur 14, ce choix étant déterminé par la position d'un commutateur 16. Le modulateur 12 permet à des données présentes sur une borne 18 d'être transmises sur un canal dont la fréquence est déterminée par un synthétiseur de fréquence 20. Ce synthétiseur de fréquence est aussi utilisé par le récepteur 14 pour fixer la fréquence du premier oscillateur local. Cette fréquence, par rapport à la fréquence d'émission, est décalée d'une valeur égale à celle de la fréquence intermédiaire Fi. Un commutateur 22 permet d'aiguiller la fréquence de sortie du synthétiseur 20 soit sur le modulateur d'émission 12 soit le récepteur 14. Lorsque le synthétiseur 20 est branché sur le récepteur 14, il est prévu une commande 24 pour décaler de Fi la valeur de la fréquence de sortie du synthétiseur 20. Une commande de blocage 26 permet d'annihilier le signal de sortie du synthétiseur 20 pendant le temps de garde Tg.

Une borne 30 permet à l'utilisateur de traiter les données fournies par le récepteur 14. A cette borne est connecté un circuit de reconnaissance de code de synchronisation 35. Ce circuit est formé par un registre à décalage 40 auquel est rattaché un décodeur 42. Ce registre se remplit des données provenant de la sortie du récepteur 14 au rythme d'une horloge 44 synchronisée, notamment au moyen de la suite RO, à la fréquence d'apparition des éléments binaires. Lorsque le code MS est contenu en entier dans le registre 40, il est alors reconnu par le décodeur 42 qui fournit un signal actif (voir à la figure 3 la ligne (MS)). Ce signal actif est retardé d'un temps Tp' au moyen d'un circuit retardateur 46 avant d'être appliqué à l'entrée de déclenchement d'un circuit monostable 48 à redéclenchement. Ce temps Tp' correspond à la fin de l'utilisation du canal. La période de basculement du circuit monostable 48 est légèrement supérieure à la période d'apparition du signal MS de sorte qu'à la sortie du circuit 48, apparaît un signal logique SYN prenant la valeur logique «1» à la fin de l'exploitation d'un canal qui a transmis le code MS. Le signal SYN reste à ce niveau logique «1» tant que ce code est régulièrement reçu.

Le synthétiseur 20 est muni d'une entrée de code 50. Le code présent à cette entrée doit être validé par la transition d'un signal SF pour pouvoir déterminer la fréquence du signal de sortie de ce synthétiseur 20. Ces codes proviennent d'un générateur de codes 55 qui est du type, par exemple, à séquence pseudo-aléatoire. Le rythme d'apparition de ces codes est fixé par un signal FA élaboré au moyen d'une base de temps à quartz 60; à chaque front montant du signal FA apparaît un nouveau code à la sortie du générateur 55 pendant un temps fixé par une courte impulsion d'un signal WE. En dehors de ce temps la sortie du générateur est à haute impédance.

Il convient de rappeler que les générateurs contenus dans tous les postes émetteurs-récepteurs faisant partie du même système de transmission par évasion de fréquence sont initialisés en même temps et sont maintenus ensuite en permanence à l'état de fonctionnement.

Les codes de ce générateur 55 définissent donc les canaux; parmi ces codes on distingue:

– les codes DO, EO, FO . . . qui déterminent les canaux médians

– les codes $D_{-2}$, $D_{-1}$; $E_{-2}$, $E_{-1}$; $F_{-2}$, $F_{-1}$; . . .qui déterminent les canaux antérieurs;

– les codes $D_{+1}$, $D_{+2}$; $E_{+1}$, $E_{+2}$; . . . qui déterminent les canaux postérieurs.

Ainsi, le générateur 55 fournit, comme cela est montré à la figure 1 a, successivement les codes . . . $D_{-2}$, $D_{-1}$, DO, $D_{+1}$, $D_{+2}$, $E_{-2}$, $E_{-1}$, EO, $E_{+1}$, $E_{+2}$, $F_{-2}$, $F_{-1}$, . . .

Pour un poste en veille, régi donc par la loi de sauts lents, ce sont les codes . . .DO, EO;.. qui vont fixer pendant 5Tp les canaux médians.

Un circuit de logique de position portant la référence 70 fournit différents signaux définissant les différentes positions que peut prendre le poste émetteur-récepteur. Ces positions sont déterminées principalement au moyen d'une commande E/R qui se présente, à la figure 4, sous la forme d'un commutateur appliquant un «1» logique à l'entrée d'une bascule de type D, portant la référence 72, pour la position émission et un «0» logique pour la postion réception. Dans la position réception on distingue la position réception active c'est-à-dire que le poste est en exploitation selon la loi de sauts rapides, et la position veille dans ce cas le poste est en exploitation selon la loi de sauts lents, le passage de la loi de sauts lents à la loi de sauts rapides étant déclenché lorsque le signal SYN prend la valeur «1». L'entrée d'horloge de la bascule 72 reçoit le signal FA. Le signal Em qui apparaît à la sortie Qu de la bascule 72 commande notamment la position des commutateurs 16, 22 et celle de l'interrupteur 24, le signal $\overline{Em}$ à la sortie $\overline{Q}$ de la bascule 72 est utilisé, entre autres, pour élaborer d'une part le signal RA qui, lorsqu'il a la valeur «1», signifie que le poste est en position réception active et d'autre part le signal VE qui, lorsqu'il a la valeur «1», signifie que le poste est en position veille. Le signal RA est élaboré au moyen d'une porte ET 74 qui reçoit sur une de ses entrées le signal $\overline{Em}$ et sur l'autre le signal SYN tandis quele signal VE apparaît à la sortie d'une autre porte ET 76 recevant sur l'une de ses entrées le signal $\overline{Em}$ et sur l'autre le signal $\overline{SYN}$.

La première exigence que l'on s'impose est que, lorsque le poste passe en émission, le code qui doit être appliqué aux entrées 50 au prochain front montant du signal FA est celui qui serait émis si le poste était resté, depuis l'initialisation du générateur 55, en position émission. La deuxième exigence est que dès que le mot de synchronisation est reçu (cela arrive, par principe, uniquement dans les canaux médians) le récepteur doit se mettre en écoute sur le canal postérieur suivant le canal médian et passer ainsi à la loi de sauts rapides.

Conformément à l'invention pour satisfaire ces exigences on a prévu un dispositif à mémoire 100 auquel sont rattachés un circuit d'écriture 110 pour y inscrire au rythme de la loi de sauts rapides les codes fournis par.le générateur 55 et un circuit de lecture 120 pour y prélever le code destiné à fixer le canal de fréquence en fonction de la position du poste émetteur-récepteur et de la réception du code de synchronisation.

Le circuit d'écriture 110 fournissant des codes d'adresse d'écriture WADR est formé par un compteur 122 dont les positions de comptage correspondent chacune à une adresse de la mémoire 100. Ces adresses sont représentées symboliquement par $ad_{-2}$, $ad_{-1}$, $ad_0$, $ad_{+1}$, $ad_{+2}$. A chaque front montant du signal FA, le compteur 122 est incrémenté d'une unité. A partir de ce signal FA, la courte impulsion WE dont il a été question est élaborée, à l'intérieur de la base de temps 60, pour, d'une part, mettre la mémoire 100 en position d'écriture et pour, d'autre part, connecter son entrée de code d'adresse 150 sur les sorties en parallèle du compteur 122 par l'intermédiaire d'un commutateur 155. Les données à emmagasiner sont disponibles sur une ligne à plusieurs fils BUSD qui interconnecte la sortie du générateur 55, les accès de données de la mémoire 100 et les entrées 50 du synthétiseur 20. La sortie du générateur 55 étant à trois états, les données sont émises sur la ligne BUSD lorsque l'impulsion WE est active. Les codes fournis par le générateur 55 sont rangés successivement dans la mémoire 100 de la manière suivante:

Le code DO est enregistré à l'adresse adO
Le code $D_{+1}$ est enregistré à l'adresse $ad_{+1}$
Le code $D_{+2}$ est enregistré à l'adresse $ad_{+2}$
Le code $E_{-2}$ est enregistré à l'adresse $ad_{-2}$
Le code $E_{-1}$ est enregistré à l'adresse $ad_{-1}$
Le code EO est enregistré à l'adresse adO
et ainsi de suite.

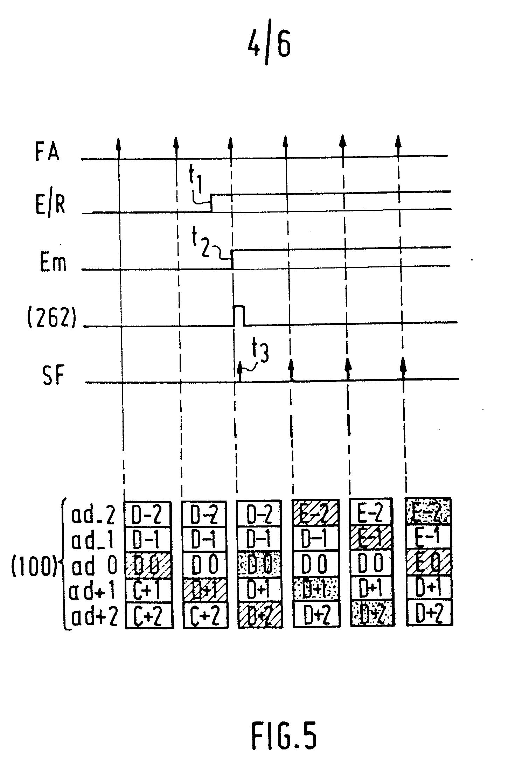

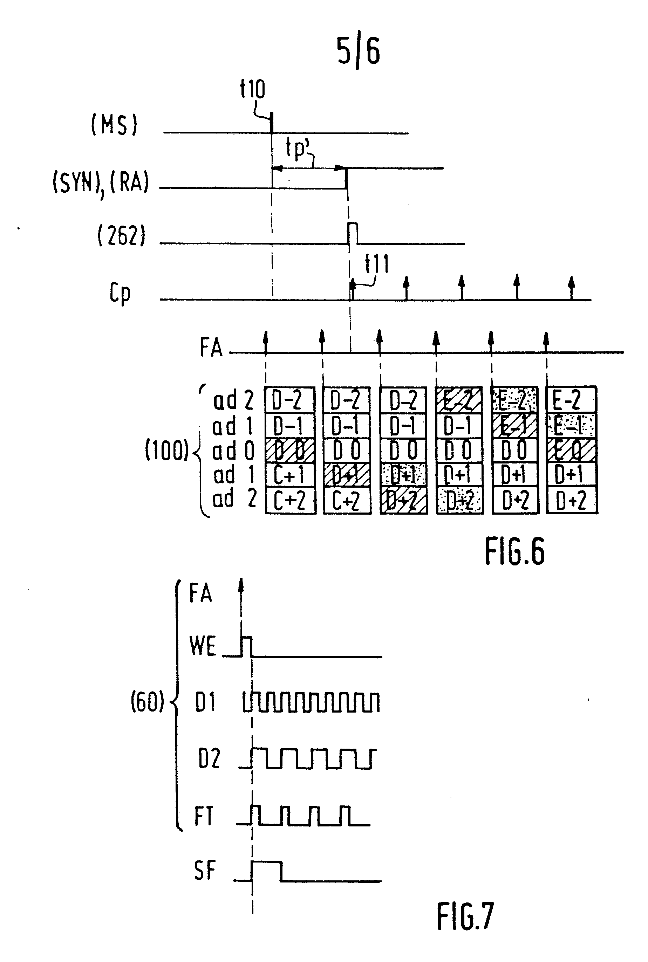

Aux figures 5 et 6 la ligne (100) représente les emplacements des mémoires avec le code qu'elles contiennent. Les cases hachurées indiquent l'inscription d'un code nouveau.

Le circuit de lecture 120 fournissant un code d'adresse de lecture RADR comporte un registre 200 qui contient en permanence le code d'adresse adO c'est-à-dire l'adresse du canal médian. Ce code transite par un commutateur 222 en position «ve» avant d'être appliqué à l'entré 150 de la mémoire 100. Ainsi le canal d'écoute est toujours le canal médian de sorte que le poste émetteur-récepteur se trouve en position veille avec la loi de sauts lents. Lorsque le poste émetteur-récepteur est en position réception avec les canaux d'écoute suivant la loi de sauts rapides, ou lorsqu'il est en position émission, le code de lecture provient d'un compteur 250; lorsque le poste émetteur-récepteur est en position émission ce compteur s'incrémente d'une unité à chaque front actif du signal FA et lorsqu'il est en position réception (sauts rapides) à chaque front montant d'un signal Cp dont il sera question par la suite, ce choix étant effectué par l'intermédiaire d'un commutateur 252 commandé par le signal Em. Lorsque le poste est en position émission, on impose une relation entre le code d'adresse d'écriture WADR et le code d'adresse de lecture RADR. Pour cela le compteur 250 est initialisé au passage à «1» du signal Em; le code WADR est diminué de deux unités au moyen d'un organe de soustraction 255; puis ce code est appliqué aux entrées en parallèle du compteur 250 par l'intermédiaire d'un commutateur 260 mis en position «wm» par le signal Em prenant la valeur «1». Un formateur d'impulsions 262 fournit une impulsion à l'entrée de commande de chargement du compteur 250. Cette impulsion de chargement est déclenchée par la transition de «0» à «1» de la valeur du signal Em transmise par une porte «OU» 265.

Le circuit de lecture 120 comporte un autre registre 270 qui contient le code d'adresse «ad1»; ce code est destiné à être chargé dans le compteur 250 lorsque le commutateur 260 est dans son autre position et lorsque l'impulsion de sortie du formateur 262 est déclenchée par le passage à «1» du signal RA.

Le poste émetteur-récepteur montré à la figure 4 comporte enfin un circuit de gestion de pallier 300 qui coopère avec la base de temps 60. Ce circuit de gestion est constitué à partir d'un compteur 305 muni d'une entrée pour signaux de comptage connectée à la sortie d'une porte «ET» 307 et d'une entrée de remise à zéro connectée à la sortie d'une porte «OU» 310. C'est à la sortie de cette porte 310 que le signal Cp est fourni. A ce compteur 305 sont adjoints quatre décodeurs 311, 312, 313, 314. Le décodeur 311 fournit le signal SF pou un contenu minimum; le décodeur 312 fournit un signal actif lorsque le compteur 305 atteint sa position maximum, la fréquence des signaux d'incrémentation étant telle que la durée que met le compteur 305 pour atteindre sa position maximale en partant de sa position initale correspond au temps Tp; le décodeur 313, utilisé pour une variante de l'invention, fournit un signal TM dont le passage à l'état actif devrait correspondre au passage à l'état actif du signal MS et le décodeur 314 fournit un signal actif correspondant à la fin du temps de garde Tg. Ce dernier signal est appliqué à l'entrée S d'une bascule de type RS portant la référence 320 tandis que l'entrée R est reliée à la sortie de la porte «OU» 310. A la sortie de la bascule 320, on prélève le signal BL qui ouvre l'in terrupteur 26 pendant Tg et le ferme ensuite. La sortie du décodeur 312 est reliée d'une part à l'entrée d'une porte «ET» 322 à deux entrées, dont l'autre entrée reçoit le signal VE par l'intermédiaire d'un inverseur de signaux logiques 323 et d'autre part à l'entrée d'une porte «ET» 324 à deux entrées aussi, dont l'autre entrée reçoit directement le signal VE. La sortie de la porte 322 est reliée à l'une des deux entrées de la porte «OU» 310 tandis que la sortie de la porte 324 est reliée à l'une des deux entrées de la porte 307 par l'intermédiaire d'un inverseur de signal logique 327. L'autre entrée de la porte 307 est reliée soit directement à la sortie de la base de temps 60 pour recevoir un signal FT selon une première variante 1 de l'invention, soit à la sortie d'un circuit de régulation 350 selon la variante II de réalisation préférée de l'invention, dont il a été question. Ce circuit 350 sera décrit plus loin dans le présent mémoire. Outre le signal issu de la porte 322, la porte «OU» 310 reçoit un signal issu d'un formateur d'impulsions 352 déclenché par le signal de sortie d'une porte «OU» 354 munie de trois entrées. Une de ces entrées reçoit le signal Em, l'autre, le signal RA et la troisième, le signal de sortie d'une porte 355 dont l'une des deux entrées reçoit le signal VE et l'autre un signal AO élaboré par un décodeur 360 rattaché au compteur 122. Ce décodeur 360 fournit un signal actif à l'apparition, à l'intérieur du compteur 122, du code d'adresse «adO».

On explique maintenant le fonctionnement du poste émetteur-récepteur conforme à l'invention. Pour cela, on se rapporte, tout d'abord, à la figure 5 qui représente le cas où de la position veille on manœuvre la commande E/R pour passer en position émission.

En position de veille, le commutateur 222 est à sa position «ve» de sorte que le code RADR est le code «adO» contenu dans le registre 200, le code contenu à cet emplacement de la mémoire 100 est validé par le signal SF qui survient au début du temps de garde Tg; en position de veille, ce temps de garde n'apparaît qu'à chauqe changement de code à l'adresse «adO». Ce changement détecté par le décodeur 360 provoque via les ports 355, 354, le formateur 352 et la porte 310, une impulsion de remise à zéro du compteur 305 et la mise à zéro de la bascule 320. Le compteur 305 compte des impulsions rapides de la base de temps 60 puis le signal SF apparaît, qui valide le nouveau code issu de l'emplacement «adO» de la mémoire 100 pour le synthétiseur, puis le compteur arrive à un contenu correspondant au temps Tg, la bascule 320 est mise à «1» ce qui ferme l'interrupteur 26. Enfin, le compteur atteint sa position maximale, il est alors bloqué puisque d'une part, la porte 322 est fermée donc la porte 310 ne peut pas fournir d'impulsion de remise à zéro et d'autre part, la porte 307 est aussi fermée par le signal de sortie de l'inverseur 327 traduisant le fait que l'on est en veille et que le compteur 305 est à sa position maximale. Pour débloquer le compteur il faut donc attendre la prochaine apparition du signal AO.

Lorsqu'on veut passer en émission on manœuvre la commande E/R de sorte qu'un «1» soit appliqué à l'entrée D de la bascule 72; en se reportant à la figure 5, cette manœuvre a lieu au temps «t1», le front montant du signal FA qui suit provoque au temps «t2» le passage de la valeur «O» à la valeur «1» du signal em ce qui a pour effet de faire mettre en position «em» le commutateur 260 et de changer de position le commutateur 222 et surtour de déclencher l'impulsion de chargement fournie par le circuit 262 pour le compteur 250. Par ailleurs le passage à «1» du signal em déclenche à l'intérieur du circuit de gestion de palier, le formateur d'impulsions 352 ce qui remet à zéro le compteur 305 et met à l'état actif le signal BL; le compteur 305 commence à comter et fournit bientôt le signal SF qui valide à l'instant t3 le code de sortie de la mémoire 100 correspondant à l'adresse contenue dans le compteur 250; cette adresse est définie par le code contenu dans le compteur 122 diminué de deux unités puis transféré dans le compteur 250 par l'impulsion fournie par le formateur 262. Ceete diminution s'effectue «modulo 5» ce qui correspond au nombre d'emplacement de la mémoire 100. Si on se rapporte à la ligne (100) on voit l'évolution de l'écriture et de la lecture de la mémoire 100. Juste avant l'instant t1, on inscrit dans la mémoire 100 le code $D_{+1}$; le fait de passer en émission ne perturbe en rien le cycle d'écriture de la mémoire. Par contre à l'instant t3 où apparaît la transition active du signal SF le code DO est lu puisqu'il se trouve à l'adresse «adO» alors que le code d'écriture était «$ad_{+2}$». Le compteur 250 sera incrémenté au prochain passage à zéro (signal Cp) du compteur 305 et le code $D_{+1}$ sera lu à l'emplacement «$ad_{+1}$» le processus se déroule alors de la même manière. On constate donc que le code qui gouverne la fréquence du synthétiseur 20 est retardé systématiquement de deux codes par rapport au code engendré par le générateur 55.

On examine le cas où de la position veille le poste émetteur-récepteur passe en réception active c'est-à-dire que ce passage intervient dès que le mot MS est reçu. Ce cas est expliqué à l'aide de la figure 6.

On suppose qu'à l'instant t10 le mot de synchronisation est contenu dans le registre 40 ce qui est détecté par le décodeur 42; cette impulsion retardée de la durée Tp' met le signal SYN à l'état «1» logique et de ce fait le signal RA également. Le formateur d'impulsions 262 provoque le chargement du compteur 250 de sorte que celui-ci contienne le code «ad1» provenant du registre 270. Par ailleurs le compteur 305 est mis à zéro ce qui fait surgir la première impulsion Cp à l'instant t11 (figure 6). Bien que l'entrée de comptage du compteur 250 reçoive le signal Cp par l'intermédiaire du commutateur 252, cette première impulsion Cp est sans influence sur le contenu de celui-ci, la commande de chargement étant prioritaire sur tout autre action. Mais cette impulsion Cp de remise à zéro du compteur 305 fait surgir, peu de temps après, l'impulsion SF qui valide le code de sortie de la mémoire 100, ce code étant situé à l'adresse $ad_{+1}$. Puis l'impulsion du formateur 262 disparaissant, la prochaine impulsion Cp incrémentera le compteur 250. La figure 6 montre en pointillé, tout comme la figure 5, les cases des codes lus tandis que les cases de codes inscrits sont hachurées. A chaque front montant du signal FA un code du générateur 55 est inscrit est à chauqe signal SF un code provenant de la mémoire 100 est validé pour le synthétiseur 20.

La figure 7 montre l'allure de signaux fournis par la base de temps 60. Ces signaux, tous périodiques, sont élaborés à partir d'un signal de fréquence élevée D1 égale ou supérieure à un multiple de la fréquence d'apparition des éléments binaires. A partir de D1 le signal D2 est obtenu après division par deux puis on réalise le signal FT tel que $FT = D1.D2$. Les signaux FA et WE ont des périodes égales à la durée du temps de palier, la largeur du temps où WE est actif est égale à la demi-période du signal D1 et ce signal est actif quand D1=O. On remarquera que le signal SF n'apparaît qu'à un front montant du signal FT qui fait incrémenter le compteur de palier 305, et donc que la transition active n'apparaît que lorsque D1 est égal à «1»; on se rend alors compte qu'il n'y a aucun problème de lecture et d'écriture simultanées de la mémoire 100.

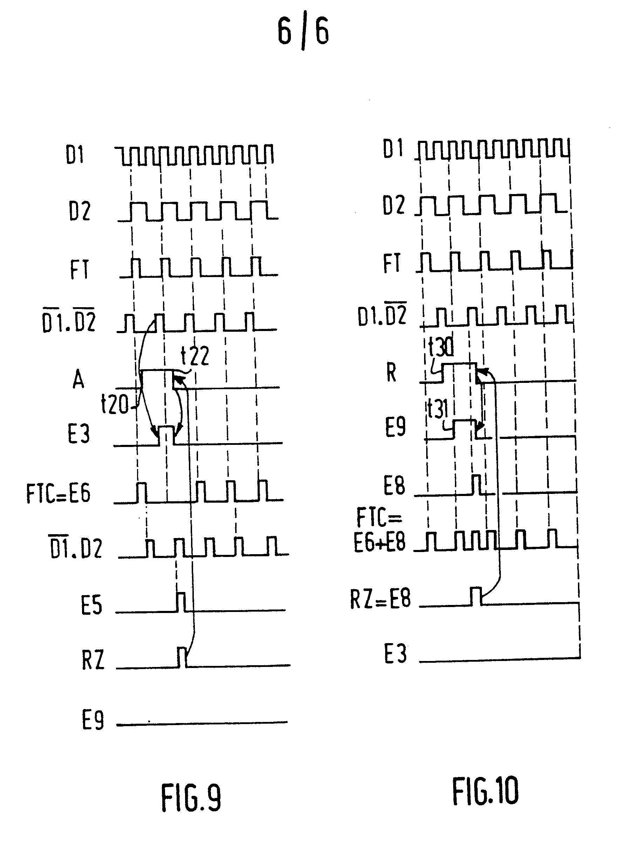

A la figure 8, on a représenté le détail de réalisation du circuit de régulation 350. Ce circuit modifie la cadence des signaux de comptage du compteur 305. Cette modification est basée sur l'instant d'apparition d'un code particulier dans le temps de transmission dans un canal. Dans le cadre de l'exemple décrit ce code est le code MS utilisé déjà, ce code MS doit être reconnu au temps TM compté depuis le début du palier. Ce temps TM est déterminé dans le poste émetteur-récepteur au moyen du décodeur 313, le circuit de régulation 350 va donc œuvrer pour qu'il y ait une coïncidence dans le temps entre l'apparition du signal MS et celle du signal de sortie TM du décodeur 313.

Ce circuit de régulation 350 est constitué à partir d'un compteur-décompteur 400 auquel sont rattachés deux décodeurs 402 et 404; le décodeur 402 fournit un signal A qui, actif, signifie que l'apparition de MS est en avance sur celle de TM; le décodeur 404 fournit un signal R qui, actif, signifie que l'apparition de MS est en retard sur celle de TM.

Le compteur-décompteur 400 peut être mis en position de comptage ou de décomptage par le signal de sortie d'une bascule de type RS portant la référence 406. Le signal «1» de cette bascule met le compteur-décompteur 400 en position de comptage et le signal «0» en position de décomptage. La bascule 406 est mise à «1» par le signal Cp et à «0» par le signal TM. Le signal MS est appliqué à l'entrée de comptage-décomptage pour incrémenter de «+1» ou «−1» le compteur-décompteur selon que l'on est en comptage ou en décomptage. Le compteur-décompteur 400 peut être mis à zéro par le signal de sortie d'une porte «OU» 410 dont une de ses deux entrées reçoit le signal de sortie d'un formateur d'impulsions 412 et l'autre un signal RZ. L'entrée du formateur 412 reçoit le signal SYN; le signal RZ provient d'une porte «OU» portant la référence 414.

Le signal FT dont on veut rajouter ou retrancher une impulsion selon que le signal A ou R est engendré est appliqué, d'une part, à l'une des deux entrées d'une porte 420 et, d'autre part, à l'une des deux entrées d'une porte 422. L'autre entrée de la porte 420 est reliée à la sortie d'une porte «OU» 426 dont une des deux entrées est reliée à la sortie de la porte 420 et l'autre à la sortie du décodeur 404. L'autre entrée de la porte 422 est reliée à la sortie d'une porte ET 430 par l'intermédiaire d'un inverseur de signaux logiques 432. Une des deux entrées de la porte 430 est reliée à la sortie d'une porte OU 434 munie de deux entrées. L'une est connectée à la sortie de la porte 430, l'autre, à la sortie du décodeur 402. La sortie de la porte 430 est reliée à l'une des entrées d'une porte ET 436 dont la sortie est reliée à l'une des deux entrées de la porte 414. Une porte «OU» à deux entrées 437 fournit le signal FTC qui est le signal FT corrigé que l'on applique selon cette variante II à

l'entrée d'incrémentation du compteur de palier 305. Les deuxièmes entrées des portes 414 et 420 sont connectées à la sortie d'une porte ET 425 dont une des deux entrées est connectée à la sortie de la porte 420. La deuxième entrée de la porte 437 est reliée à la sortie de la porte 422. Différents signaux intervenant dans le fonctionnement du circuit de régulation sont issus de la base de temps 60. Ce sont les signaux:

$\overline{D1}$. D2 qui sont appliqués à la deuxième entrée de la porte 430

$\overline{D1}.\overline{D2}$ qui sont appliqués à la deuxième entrée de la porte 436

$D1.\overline{D2}$ qui sont appliqués à la deuxième entrée de la porte 426

Pour expliquer le fonctionnement du circuit de régulation on fera appel aux signaux:

E3 signal de sortie de la porte 430
E5 signal de sortie de la porte 436
E8 signal de sortie de la porte 425
E9 signal de sortie de la porte 420.

La figure 9 montre le cas où le signal A prend la valeur «1» à l'instant t20. Ceci a pour effet de débloquer le montage formé par les portes 430 et 434 de sorte que le front montant du signal $\overline{D1}.D2$ est transmis par la porte 430. Le signal E3, signal de sortie de la porte 430, ouvre la porte 436 de sorte que la prochaine impulsion du signal $\overline{D1}.D2$ est transmise, via les portes 436, 414 et 410, comme impulsion de remise à zéro du compteur-décompteur 400 (signal E5 et RZ). Le signal A prend alors la valeur «0» à l'instant t22 ce qui entraîne aussi la valeur «0» pour le signal E3. Le montage des portes 430 et 434 est bloqué et le signal $\overline{D1}.\overline{D2}$ n'est plus transmis. Pendant le laps de temps où E3 avait la valeur «1» la porte 422 était bloqué; ainsi le signal FTC (FTC=E6) présente une impulsion en moins par rapport au signal FT. On notera que, pendant toutes ces opérations, le signal E5 a la valeur «0», et n'intervient pas dans ce cas. Il n'en est pas de même lorsque le signal R prend la valeur «1» (voir la figure 10) à l'instant t30, ce qui provoque la mise à «1» du signal E5 à l'instant t31 au prochain front montant du signal FT. Le signal E9 ayant la valeur «1» la porte E8 transmet via les portes 414 et 410 une impulsion de remise à zéro pour le compteur-décompteur 400 et insère dans les impulsions FT une impulsion supplémentaire. Dans ce cas FTC=E6+E8. On notera que E3 reste à zéro.

## Revendications

1. Poste émetteur-récepteur pour un système de transmission d'informations par évasion de fréquences, comportant un générateur de codes pour définir l'exploitation d'une pluralité de canaux selon une loi dite loi de sauts rapides pour un poste émetteur-récepteur en position émission ou en position réception et selon une loi dite loi de sauts lents pour un poste émetteur-récepteur en position veille, la loi de sauts rapides consistant en l'exploitation de chacun des canaux pendant un temps Tp, caractérisé en ce qu'il comporte un dispositif de mémoire auquel sont rattachés d'une part un circuit d'écriture pour y emmagasiner au fur et à mesure les codes provenant du générateur et d'autre part un circuit de lecture pour y prélever les codes en fonction des positions du poste émetteur-récepteur:

– en position émission et réception, pour établir la loi de sauts rapides,

– en position veille pour établir la loi de sauts lents consistant en un changement de canaux d'écoute exploités pendant N × Tp correspondant chacun à un canal médian d'une succession de N canaux de ladite loi de sauts rapides, et des moyens pour inclure un code de synchronisation dans chaque canal médian.

2. Poste émetteur-récepteur selon la revendication 1, caractérisé en ce que le dispositif de mémoire est formé par une mémoire à accès direct ayant une capacité pour N codes tandis que le circuit d'écriture est un compteur modulo N s'incrémentant d'une unité à chaque code fourni par le générateur de code, en ce que le circuit de lecture prélève:

– en position émission un code dont l'adresse en mémoire est définie à partir de code du compteur modulo N par une certaine relation,

– en position veille un code à l'adresse du code définissant le canal médian,

– en position réception le code à l'adresse supérieure d'une unité à l'adresse du code médian, dès que le signal en sortie d'un circuit de reconnaissance de code de synchronisation apparaît et successivement les codes rangés à des adresses successives de la mémoire.

3. Poste émetteur-récepteur selon la revendication 2, caractérisé en ce qu'il est prévu un circuit de gestion de palier formé à partir d'un compteur de temps pour fixer les différents temps lors de l'exploitation d'un canal et muni d'une commande d'initialisation coopérant avec le circuit de reconaissance de code de synchronisation.

4. Poste émetteur-récepteur selon la revendication 3 convenant pour un système de transmission par évasion de fréquence pour lequel il est prévu des temps de garde entre chaque changement de canaux et étant pourvu d'un oscillateur de détermination de canal servant de premier oscillateur pour la réception et d'oscillateur pilote pour la partie émission, caractérisé en ce qu'il est prévu des moyens de blocage du signal de sortie de cet oscillateur de détermination de canal commandé par un signal issu du circuit de gestion de palier pendant les temps de garde.

5. Poste émetteur-récepteur selon la revendication 3 ou 4 caractérisé en ce qu'il est prévu un circuit de régulation pour fournir dessignaux à cadence variable au compteur de temps du circuit des gestion de palier, comportant un moyen de comparaison entre d'une part le temps d'apparition d'un code prédéterminé lors de l'exploitation des canaux et d'autre part le temps d'apparition prévu par le compteur de temps et des moyens d'action agissant sur ladite cadence pour faire correspondre ces deux temps.

## Patentansprüche

1. Sendeempfangsstelle für ein Informations-übertragungssystem nach dem Frequenzsprungverfahren mit einem Kode-Generator zum Bestimmen der Verwendung einer Anzahl Kanäle nach einer Regel, die als Schnellsprungregel bezeichnet wird, für eine Sendeempfangsstelle in dem Sendezustand oder in dem Empfangszustand und nach einer Regel, die als Langsamsprungregel bezeichnet wird, für eine Sendeempfangsstelle in dem Ruhezustand, wobei die Schnellsprungregel aus der Verwendung jedes Kanals während einer Zeit Tp besteht, dadurch gekennzeichnet, dass sie eine Speicheranordnung aufweist, mit der einerseits ein Einschreibekreis verbunden ist um in der Speicheranordnung jeweils die von dem Generator herrührenden Kodes zu speichern und andererseits ein Auslesekreis um der Speicheranordnung die Kodes als Funktion der Zustände der Sendeempfangsstelle zu entnehmen:

– in dem Sende- und Empfangszustand zum Einstellen der Schnellsprungregel,

– in dem Ruhezustand zum Einstellen der Langsamsprungregel, die aus einer Änderung der während N × Tp verwendeten Abhörkanäle besteht, die je einem Mittelkanal einer Reihe von N Kanälen der genannten Schnellsprungregel entsprechen und dass sie Mittel aufweist zum in jeden Mittelkanal Einfügen eines Synchronkodes.

2. Sendeempfangsstelle nach Anspruch 1, dadurch gekennzeichnet, dass die Speicheranordnung durch einen Speicher mit Direktzugriff gebildet ist mit einer Speicherkapazität für N Kodes, während der Einschreibekreis ein Modulo-N-Zähler ist, der bei jedem von dem Kodegenerator gelieferten Kode um eine Einheit erhöht wird und dass der Auslesekreis

– in dem Sendezustand einen Kode holt, dessen Adresse in dem Speicher ausgehend von dem Kodes des Modulo-N-Zählers durch eine bestimmte Beziehung definiert wird,

– in dem Ruhezustand an der Adresse des den Mittelkanal bestimmenden Kodes einen Kode holt,

– in dem Empfangszustand den Kode holt, auf einer Adresse, die um eine Einheit höher steht als die Adresse des Mittelkanals, sobald das Signal an dem Ausgang des Synchronkodewiedererkennungskreises erscheint und danach die nach den aufeinanderfolgenden Adressen des Speichers gegliederten Kodes.

3. Sendeempfangsstelle nach Anspruch 3, dadurch gekennzeichnet, dass eine Schwellensteuerschaltung vorgesehen ist, die aus einem Zeitzähler zum Festlegen der unterschiedlichen Zeiten dass ein Kanal verwendet wird, gebildet ist und die mit einer Anfangsregelung versehen ist, die mit dem Synchronkodewiedeerkennungskreis zusammenarbeitet.

4. Sendeempfangsstelle nach Anspruch 3, geeignet für ein Übertragungssystem nach dem Frequenzsprungverfahren zu welchem Zweck zwischen jeder Kanaländerung Überwachungszeiten vorgesehen sind sowie mit einem Kanalbestimmungsoszillator, der als erster 0 Oszillator für den Empfang und als Steueroszillator für den Sendeteil wirksam ist, dadurch gekennzeichnet, dass Mittel zum Sperren des Ausgangssignals dieses Kanalbestimmungsoszillators vorgesehen sind, der durch ein Signal gesteuert wird, das während der Überwachungszeiten von der Schwellensteuerschaltung herrührt.

5. Sendeempfangsstelle nach Anspruch 3 oder 4, dadurch gekennzeichnet, dass ein Regelkreis vorgesehen ist zum Liefern von Signalen mit einer veränderlichen Frequenz zu dem Zeitzähler der Schwellensteuerschaltung, wobei dieser Kreis ein Vergleichsmittel aufweist zum Vergleichen der Erscheinungszeit eines vorbestimmten Kodes, der im Betrieb der Kanäle empfangen wurde mit der Erscheinungszeit, die aus dem Zeitzähler erhalten worden ist, sowie Betätigungsmittel, welche die Frequenz beeinflussen können, damit diese zwei Zeiten übereinstimmen.

## Claims

1. A transceiver station for a system of transmitting data by frequency hopping, comprising a code generator for defining the use of a plurality of channels in accordance with a so-called high-speed skip law for a transceiver station in the transmitting mode or in the receiving mode and in accordance with a so-called low-speed skip law for a transceiver station in the stand-by mode, the high-speed skip law consisting in the use of each of the channels during a time $T_p$, characterised in that it comprises a memory device to which are connected a write circuit for progressively storing therein the codes received from the generator and also a read circuit for reading from the memory the codes as a function of the positions to which the transceiver station has been adjusted:

– in the transmitting mode, for establishing the high-speed skip law,

– in the stand-by mode for establishing the low-speed skip law consisting in a change of listening channels used during N × $T_p$ each one corresponding to a centre channel of a sequence of N channels of the said high-speed skip law, and means for including a synchronizing code in each centre channel.

2. A transceiver station as claimed in Claim 1, characterized in that the memory device is constituted by a direct-access memory having a capacity of N codes while the write circuit is a modulo-N counter which is incremented by one unit step at each code supplied by the code generator, that the read circuit reads:

– in the transmitting mode a code whose address in the memory is defined on the basis of the code of the modulo-N counter using a certain relation,

– in the stand-by mode a code from the code address defining the centre channel,

– in the receiving mode the code from the address which is one unit higher than the address of the centre channel code, from the moment when the output signal of a synchronizing code-recognizing circuit appears, and sequentially the codes arranged in the consecutive addresses of the memory.

3. A transceiver station as claimed in Claim 2, characterized in that a threshold management circuit is provided which is made from a time counter for fixing the different time periods during channel usage and having a start control which cooperates with the synchronizing code-recognizing circuit.

4. A transceiver station as claimed in Claim 3, suitable for a transmission system transmitting by frequency hopping for which a waiting time is effected between each change of channels and comprising a channel determination oscillator which serves as a first oscillator for the receiving mode and a pilot oscillator for the transmitting portion, characterized in that means for blocking the output signal of this channel determination oscillator are provided controlled by a signal produced by the threshold management circuit during the waiting period.

5. A transceiver station as claimed in Claim 3 or 4, characterized in that a control circuit is provided for applying signals at a variable rate to the time counter of the threshold management circuit, comprising a comparison means for on the one hand the time at which a predetermined code appears which was received during use of the channels and on the other hand the time of appearance anticipated by the time counter and action means acting on said rate for having these two time periods correspond to each other.

1/6

FIG.1

FIG.2

11

FIG.8

FIG.3

FIG.4

FIG.5

5/6

FIG.6

FIG.7

FIG.9

FIG.10